Europäisches Patentamt

European Patent Office

Office européen des brevets

(19)

(11) **EP 0 458 752 B1**

(12) **FASCICULE DE BREVET EUROPEEN**

(45) Date de publication et mention
de la délivrance du brevet:
**23.07.1997 Bulletin 1997/30**

(51) Int Cl.6: **G01S 17/46**, G01S 3/783

(21) Numéro de dépôt: **91810392.0**

(22) Date de dépôt: **23.05.1991**

(54) **Procédé de mesure d'un angle d'incidence d'un faisceau lumineux, dispositif de mesure pour la mise en oeuvre du procédé et utilisation du dispositif pour la mesure de distances**

Messverfahren des Einfallwinkels eines Lichtstrahls, Vorrichtung zur Durchführung des Verfahrens sowie deren Verwendung zur Entfernungsmessung

Method for measuring the angle of incidence of a light beam, measuring device for carrying out the method, and distance measuring device utilising same

(84) Etats contractants désignés:
**AT BE DE ES FR GB IT NL SE**

(30) Priorité: **23.05.1990 CH 1772/90**

(43) Date de publication de la demande:
**27.11.1991 Bulletin 1991/48**

(73) Titulaires:
• **Rheme, Charles**
**1725 Posieux (CH)**
• **OPTOSYS AG**
**1752 Villars-sur-Glâne (CH)**

(72) Inventeurs:
• **Rheme, Charles**
**1725 Posieux (CH)**

• **OPTOSYS AG**
**1752 Villars-sur-Glâne (CH)**

(74) Mandataire:
**AMMANN INGENIEURS-CONSEILS EN PROPRIETE INTELLECTUELLE SA BERNE**
**Schwarztorstrasse 31**
**3001 Bern (CH)**

(56) Documents cités:
**US-A- 3 978 334**     **US-A- 4 626 100**
**US-A- 4 732 481**

• **OPTIK vol. 87, no. 3, Mai 1991, STUTTGART DE pages 95 - 102 M.C. SIMON ET AL. 'Plane parallel birefringent plates as polarization interferometers'**

## Description

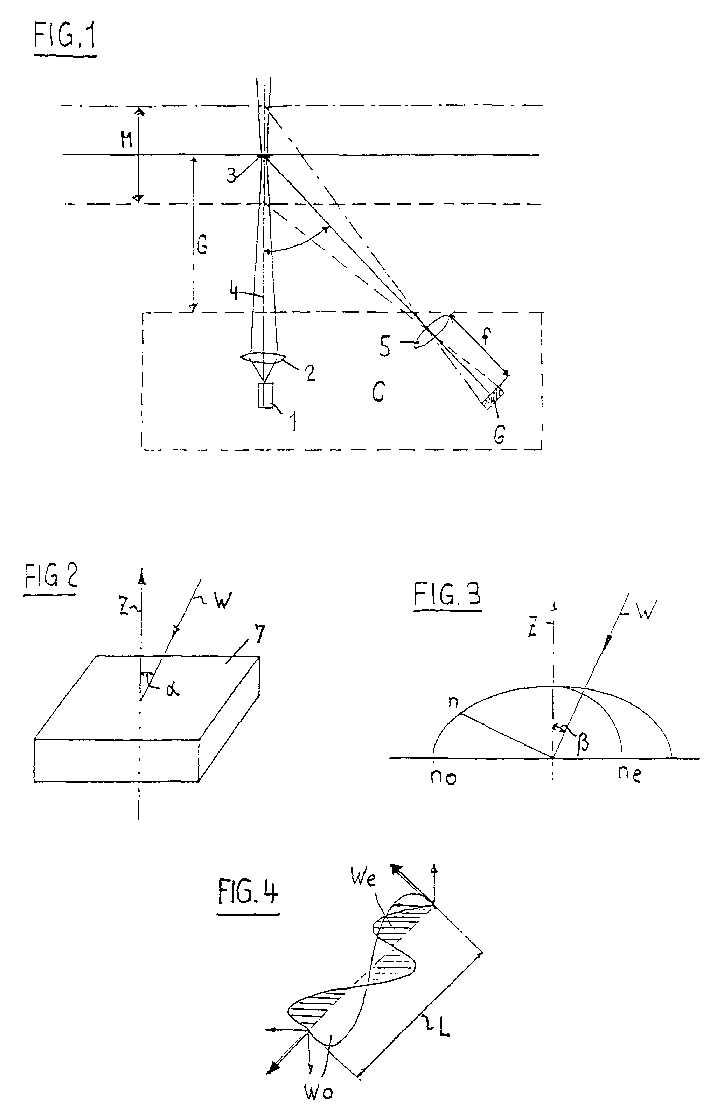

Il existe un grand nombre de procédés et de dispositifs pour mesurer par voie optique soit un angle d'incidence d'un faisceau lumineux, soit des distances entre un objet et un détecteur. Pour les mesures de grandes distances et de grande précision, l'on emploie d'habitude un laser en effectuant soit une mesure de temps pour des objets à grande distance soit une analyse des franges d'interférence pour obtenir une grande préci-sion. Pour la mesure de courtes distances et sur des machines où une très grande précision n'est pas requise, on se base en général sur le principe de triangulation qui sera décrit plus bas à l'aide de la figure 1. Ce principe de triangulation nécessite une base importante pour l'obtention d'une précision suffisante, et il en découle par principe une forte limitation de la plage de mesure, due à l'arrangement optique déterminé. Ces inconvénients sont particulièrement gênants dans le cas où l'on est obligé d'arranger le tout dans un capteur de dimension aussi petite que possible pour le fixer sur une machine-outils ou machine similaire. Ce capteur doit contenir la source de lumière et le récepteur, si possible dans un même boîtier, dont l'encombrement doit être le plus restreint possible, car la place disponible est souvent très limitée.

Il est par contre un premier objet de l'invention de fournir un procédé de mesure d'un angle d'incidence d'un faisceau lumineux simple, permettant la construction d'un dispositif dont l'encombrement est sensiblement réduit par rapport aux dispositifs connus. Il est un autre objet de la présente invention de pouvoir utiliser ce dispositif à encombrement réduit pour la mesure de distances avec une bonne précision et une plage de mesure plus grande qu'avec les dispositifs se basant sur le principe de triangulation. Ces objets sont atteints par un procédé de mesure, un dispositif de mesure pour la mise en oeuvre de ce procédé et l'utilisation du dispositif définis dans les revendications.

L'invention sera expliquée en détail en se référant aux dessins ci-annexés présentant à titre d'exemple une forme d'exécution de l'objet de l'invention.

La fig. 1 montre schématiquement le procédé de mesure de distances par triangulation selon l'état de la technique,

la fig. 2 montre schématiquement une lame biréfringente,

la fig. 3 montre la variation de l'indice extraordinaire en fonction de l'angle d'incidence,

la fig. 4 montre la séparation d'une onde lumineuse en deux rayons,

la fig. 5 5 montre schématiquement la dépendance de l'écart des franges d'interférence de l'angle à mesurer,

la fig. 6 montre le principe d'un dispositif de mesure de l'angle d'incidence,

la fig. 7 montre le principe d'un deuxième dispositif de mesure de l'angle d'incidence, et

la fig. 8 montre schématiquement un dispositif de mesure de distances utilisant une lame biréfringente.

La fig. 1 montre le principe de mesure de distances par triangulation et l'on peut apprécier l'encombrement du capteur C indiqué par le rectangle en pointillé. On reconnaît une diode laser 1, une lentille de focalisation 2 et l'objet à mesurer 3 resp. le niveau de référence. La lumière du faisceau 4 de la diode laser est réfléchie par l'objet 3 et traverse une lentille d'image 5 pour tomber sur un détecteur 6 sensible à la position. On s'aperçoit que la plage de mesure M est assez limitée et que la distance de base G est assez considérable. Cela veut dire que l'éventail d'application de ce système de mesure est assez restreint.

La fig. 2 montre une lame biréfringente 7 d'axe optique Z sur lequel le rayon lumineux tombe sous un angle d'incidence $\alpha$ que l'on veut mesurer au moyen de la présente invention. Le rayon lumineux, qui pénètre dans ce matériel sous l'angle $\beta$, est divisé, selon la polarisation, en deux rayons qui seront soumis, l'un à l'indice de réfraction ordinaire $n_o$ et l'autre à l'indice de réfraction extraordinaire n, ce dernier variant entre une valeur $n_e$ pour $\beta = 90°$ et la valeur correspondant à l'indice de réfraction ordinaire $n_o$. Si le premier indice est constant, le second variera en fonction de l'angle $\beta$ et on peut le calculer selon la formule suivante:

$$n = \frac{1}{\sqrt{\dfrac{\sin^2\beta}{n_e^2} + \dfrac{\cos^2\beta}{n_o^2}}}$$

Examinons ensuite une onde lumineuse, polarisée linéairement, qui se sépare en deux rayons ordinaires $W_o$ et extraordinaires $W_e$ se propageant à des vitesses différentes dans le matériel biréfringent (fig. 4). Après un chemin produisant un déphasage relatif d'une demie longueur d'onde entre $\omega_o$ (fig. 4) et $\omega_e$, nous constatons que le plan de polarisation de l'onde recomposée a subi une rotation de 90°, comme cela ressort schématiquement de la fig. 4. La longueur L de ce chemin est appelée lame demi-onde; elle vaudra:

$$L = \frac{\lambda}{2 \cdot n_o \cdot |n_o - n|}$$

où $\lambda$ est la longueur d'onde de l'onde lumineuse W.

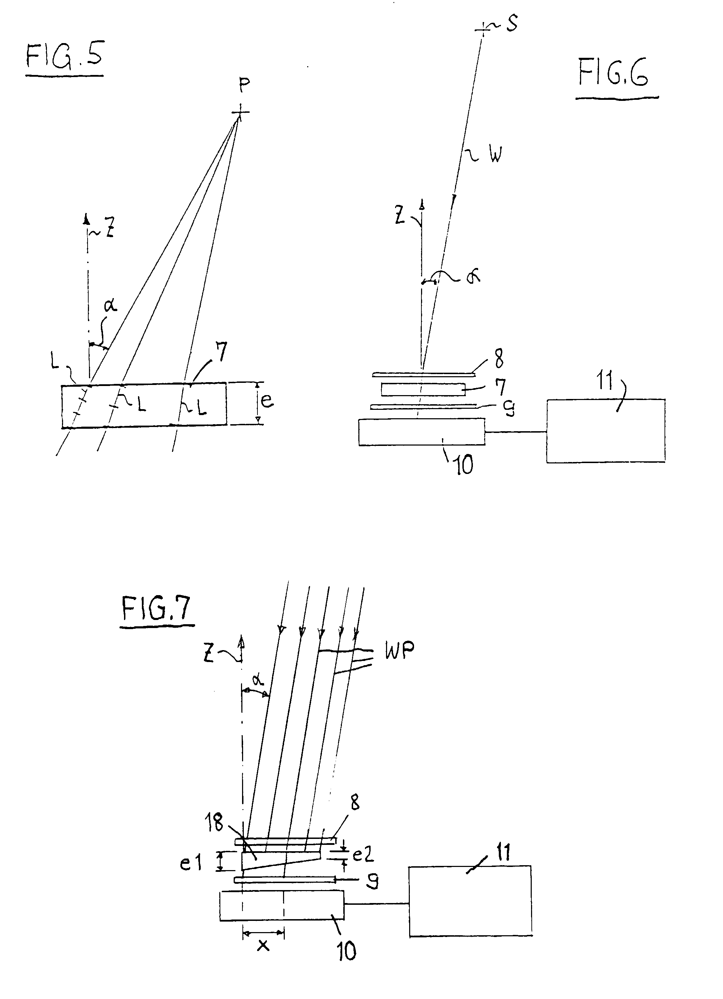

Le procédé que propose l'invention consiste à soumettre un matériel biréfringent à un faisceau de lumière polarisée monochrome. En fonction de l'angle d'incidence, les rayons lumineux vont déterminer des lames demi-ondes dans ce matériel. La longueur de ces lames diminuera très rapidement, à mesure que l'angle du rayon incident s'éloignera de l'axe optique, car la valeur de l'indice de réfraction variable se différenciera de plus en plus de l'indice ordinaire. Chaque fois que l'épaisseur du matériel correspondra à un nombre entier de lames demi-ondes, la lumière émergente aura une polarisation linéaire bien définie. Entre ces zones, la polarisation sera de nature circulaire. Par analyse de cette lumière au travers d'un polariseur linéaire ou circulaire, on observera une succession de franges d'interférence dont l'écart sera une fonction directe de l'angle à mesurer (fig. 5). Si la polarisation du faisceau incident est de nature circulaire, elle deviendra linéaire après avoir parcouru un chemin équivalent à une lame quart-d'onde. Son comportement sera semblable ensuite au cas déjà décrit.

Dans la fig. 5, P représente une source de lumière polarisée, Z l'axe optique, $\alpha$ l'angle d'incidence et on reconnaît la lame biréfringente 7 d'une épaisseur e.

A la fig. 6 on reconnaît dessiné schématiquement, un dispositif de mesure de l'angle d'incidence $\alpha$ d'un rayon W émanant d'une source ponctuelle S. Si cette source de lumière n'est pas polarisée, un polariseur 8 est placé devant la lame biréfringente 7. Pour réaliser celle-ci, on pourra, par exemple, utiliser de la calcite ou du quartz. Le choix des dimensions, principalement de l'épaisseur e, sera fonction du domaine angulaire souhaité. A titre d'exemple, une calcite d'épaisseur de 1 mm, permet de réaliser des mesures dans un domaine d'une dizaine de degrés.

La lumière sortant de la lame biréfringente 7 est analysée au travers d'un polariseur 9, par exemple un polaroid, qui mettra en évidence les franges d'interférence. Un détecteur 10, constitué par exemple d'un photocapteur CCD, permettra à un circuit électronique 11 d'analyser la position ou l'écart des franges et fournira l'information de mesure sous la forme souhaitée.

Pour la mesure de petites variations angulaires, il est préférable d'utiliser le dispositif de mesure selon la fig. 7 où l'on voit une lame biréfringente 18 avec une épaisseur variant entre une valeur e1 et e2 et d'utiliser un faisceau de lumière parallèle WP au lieu d'un faisceau provenant d'une source ponctuelle. Dans ce dispositif les autres moyens sont les mêmes que ceux du dispositif selon la fig. 6. En mesurant la position X de la lame demi-onde, on détermine sa longueur, et ensuite on calcule l'angle d'incidence $\alpha$. La mesure des variations de X fournit une mesure très sensible des variations de l'angle $\alpha$. Comme dans le premier exemple, l'épaisseur moyenne de la lame biréfringente, ainsi que sa variation, sont à choisir en fonction du domaine angulaire et de la sensibilité du dispositif de mesure.

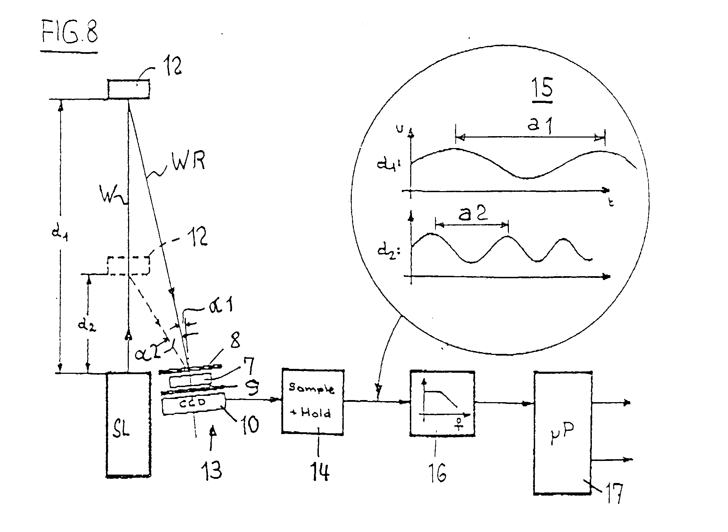

Le procédé et le dispositif de mesure esquissé auparavant schématiquement peuvent être utilisés avantageusement pour une mesure de distances entre un objet et le capteur, compris dans un dispositif de mesure, ce capteur pouvant avoir des dimensions réduites par rapport à des capteurs de distance selon l'état de la technique. La fig. 8 représente à titre d'exemple et schématiquement une exécution d'un dispositif de mesure de distances utilisant le procédé de mesure de l'angle d'incidence selon l'invention. La fig. 8 montre l'objet 12 dont on veut mesurer la distance dans deux positions dl, et d2 dessinées en pointillé. Dans ce dessin schématique et pour des raisons de clarté, ces distances se mesurent entre la surface de front de l'objet 12 et le front de la source lumineuse SL, celle-ci pouvant être un laser. En pratique, l'émetteur et le capteur sont dans un boîtier et la distance se mesure entre une surface définie de l'objet à mesurer et une face définie du boîtier. La lumière réfléchie WR de la source laser tombe sur le capteur 13 composé d'un polariseur 8 au cas où la source lumineuse n'est pas polarisée, ensuite à travers la lame biréfringente 7, l'analyseur 9 et sur un photocapteur CCD 10. La répartition de l'intensité de la lumière tombant sur le photocapteur 10, c'est-à-dire les franges d'interférence, resp. l'écart entre ces franges est mis en évidence à l'aide d'un circuit électronique 14 dénommé "Sample + Hold", à la sortie duquel la répartition de cette intensité lumineuse peut être observée par un oscillographe 15 symbolisé par le cercle contenant deux différentes formes d'oscillation. La sortie du circuit électronique 14 est connectée avec un filtre passe-bande 16 et celui-ci avec un microprocesseur 17 dont la sortie est connectée avec un dispositif d'affichage non montré. Il ressort clairement de la fig. 7 que l'angle d'incidence varie avec la distance entre l'objet à mesurer et le dispositif de mesure resp. la source laser, et que l'angle d'incidence $\alpha_1$ est beaucoup plus petit pour l'objet à la distance $d_1$ que l'angle d'incidence $\alpha_2$ pour l'objet à la distance d2. Comme cela a été décrit à l'aide de la fig. 5, l'écart entre les crêtes des franges d'interférence est une fonction de la distance et de ce fait, l'écart $a_1$ est plus grand pour la distance $d_1$, que l'écart $a_2$ ne l'est pour la distance $d_2$, reproduit schématiquement dans l'insert 15 de la fig. 8.

Dans les figures 6, 7 et 8 le détecteur 10 des franges d'interférence est un détecteur d'un profil d'intensité qui détecte les variations d'intensité lumineuse à différents endroits et en même temps. Au lieu d'un tel arrangement, il est aussi possible de prévoir un arrangement où l'angle d'incidence du faisceau lumineux varie dans le temps, et la mesure de la variation des intensités est effectuée à un endroit. Pour cela on imprime un mouvement périodique angulaire à la lame biréfringente par un dispositif électromécanique. Il est aussi possible d'utiliser comme lame biréfringente un cristal liquide montrant ces propriétés et d'appliquer un champ électrique variable pour obtenir une variation temporelle de son axe d'alignement. Les deux arrangements permettent d'utiliser un détecteur approprié connu en soi et d'employer des moyens d'analyse connus en soi et éprouvés.

Une source de lumière appropriée est par exemple un laser à diode, de préférence multimode, afin de réduire les interférences de cohérence. Mais il est aussi possible d'utiliser une diode émettrice monochrome, une LED, car sa cohérence est suffisante pour le procédé selon l'invention. Evidemment, la source lumineuse n'est pas limitée aux exemples donnés.

Comme photocapteur, le capteur CCD est préférable pour des mesures de profils d'intensité lumineuse de précision. Si les exigences ne sont pas très hautes, d'autres photocapteurs s'avèrent suffisants pour ces mesures.

## Revendications

1. Procédé de mesure de l'angle d'incidence d'un faisceau lumineux, caractérisé en ce que l'on emploie le faisceau lumineux polarisé que l'on fait passer à travers une lame biréfringente suivie d'un polariseur analyseur pour obtenir une succession de franges d'interférence et que l'on analyse à l'aide d'un détecteur approprié et d'un circuit électronique d'analyse, l'écart entre les crêtes desdites franges, cet écart étant une fonction directe de l'angle à mesurer.

2. Procédé selon la revendication 1, caractérisé en ce que l'on analyse la variation locale de l'intensité lumineuse après le polariseur analyseur à l'aide d'un détecteur de profil d'intensité lumineuse.

3. Procédé selon la revendication 1, caractérisé en ce que l'on analyse la variation temporelle de l'intensité lumineuse créée par un mouvement angulaire périodique de la lame biréfringente et que l'on emploie un détecteur d'intensité lumineuse essentiellement ponctuel.

4. Procédé selon la revendication 3, caractérisé en ce que l'on imprime à la lame biréfringente un mouvement angulaire périodique par un dispositif électromécanique.

5. Procédé selon la revendication 3, caractérisé en ce que l'on emploie un cristal liquide avec des propriétés biréfringentes et que l'on y applique un champ électrique ou magnétique variable pour obtenir une variation temporelle de son axe d'alignement.

6. Procédé selon l'une des revendications 1 à 5, caractérisé en ce que l'on polarise le faisceau incident en interposant un polariseur avant la lame biréfringente.

7. Procédé selon l'une des revendications 1 à 6, caractérisé en ce que l'on emploie une source de lumière ponctuelle.

8. Procédé selon l'une des revendications 1 à 6, caractérisé en ce que l'on emploie de la lumière parallèle et une lame biréfringente avec une épaisseur variable et que l'on détermine la longueur de la lame demionde en mesurant sa position sur le détecteur de profil d'intensité pour calculer et afficher l'angle d'incidence cherché.

9. Procédé selon l'une des revendications 1 à 8, caractérisé en ce que le faisceau lumineux provient d'une source de lumière essentiellement monochrome.

10. Procédé selon l'une des revendications 1 à 9, caractérisé en ce que l'on emploie la lumière réfléchie diffuse d'un objet.

11. Procédé selon l'une des revendications 1 à 10, caractérisé en ce que l'on emploie comme source de lumière un laser ou une diode laser ou une diode LED.

12. Procédé selon l'une des revendications 1 à 11, caractérisé en ce que l'on emploie une lame biréfringente en calcite ou en un autre matériel optiquement anisotrope.

13. Procédé selon l'une des revendications 1, 2, 6 à 12, caractérisé en ce que l'on utilise comme détecteur de profil d'intensité lumineuse un photocapteur CCD.

14. Dispositif de mesure de l'angle d'incidence d'un faisceau lumineux, caractérisé en ce que le faisceau est polarisé et en ce que le dispositif comprend une lame biréfringente (7, 18) et un polariseur analyseur (9) mettant en évidence des franges d'interférence produites par le faisceau, un détecteur des variations de l'intensité lumineuse (10) et un circuit électronique (11) d'analyse, mesurant l'écart entre lesdites franges d'interférence.

15. Dispositif selon la revendication 14, caractérisé par un polariseur (8) avant la lame biréfringente.

16. Dispositif selon la revendication 14 ou 15, caractérisé par une source de lumière (S, LS, WP) essentiellement monochrome, comprenant un laser, une diode laser ou une diode LED.

17. Dispositif selon l'une des revendications 14 à 16, caractérisé par une lame biréfringente (7) avec une épaisseur constante.

18. Dispositif selon l'une des revendications 14 à 16,

4

caractérisé par une lame biréfringente (18) avec une épaisseur variable (e1 à e2) et une source de lumière parallèle (WP).

19. Dispositif selon la revendication 14, 17 ou 18, caractérisé en ce que la lame biréfringente est en calcite, ou en un autre matériel optiquement anisotrope.

20. Dispositif selon l'une des revendications 14 à 19, caractérisé en ce que le détecteur des variations de l'intensité lumineuse est un détecteur de profil d'intensité lumineuse locale.

21. Dispositif selon la revendication 20, caractérisé en ce que le détecteur est un photocapteur CCD (10) suivi d'un circuit électronique "Sample + Hold" (14), connecté à un filtre passe-bande (16) qui est relié à un microprocesseur (17) d'analyse.

22. Dispositif selon l'une des revendications 14 à 19, caractérisé en ce que la lame biréfringente (7, 18) est compris dans un arrangement pour créer un mouvement angulaire périodique de la lame biréfringente, ou de son axe d'alignement, et par un détecteur d'intensité lumineuse essentiellement ponctuel.

23. Utilisation du dispositif selon l'une des revendications 14 à 22 pour mesurer la distance entre ce dispositif et une surface réfléchissante de l'objet à mesurer, caractérisée en ce que l'on détermine pour une certaine position de l'objet un écart de référence entre les crêtes des franges d'interférence et que l'on mesure la variation des écarts en fonction des positions de l'objet, pour les mettre à disposition en unités de longueur.

**Patentansprüche**

1. Verfahren zur Messung des Einfallwinkels eines Lichtstrahls, dadurch gekennzeichnet, dass ein polarisierter Lichtstrahl verwendet wird, der durch eine doppelbrechende Platte mit nachfolgendem Polarisator-Analysator geleitet wird, um eine Reihe von Interferenzstreifen zu erhalten, und dass der Abstand zwischen den Wellenbergen der genannten Streifen, der eine direkte Funktion des zu messenden Winkels ist, mit Hilfe eines geeigneten Detektors und einer elektronischen Analyseschaltung analysiert wird.

2. Verfahren nach Anspruch 1, dadurch gekennzeichnet, dass die lokale Helligkeitsänderung nach dem Polarisator-Analysator mit Hilfe eines Detektors des Helligkeitsprofils analysiert wird.

3. Verfahren nach Anspruch 1, dadurch gekennzeichnet, dass die durch eine periodische Winkelbewegung der doppelbrechenden Platte hervorgerufene zeitliche Helligkeitsänderung analysiert wird, und dass ein im wesentlichen punktförmiger Helligkeitsdetektor verwendet wird.

4. Verfahren nach Anspruch 3, dadurch gekennzeichnet, dass der doppelbrechenden Platte mittels einer elektromechanischen Vorrichtung eine periodische Winkelbewegung erteilt wird.

5. Verfahren nach Anspruch 3, dadurch gekennzeichnet, dass ein Flüssigkristall mit doppelbrechenden Eigenschaften verwendet wird, und dass ein veränderliches elektrisches oder magnetisches Feld an diesen angelegt wird, um eine zeitliche Änderung seiner Ausrichtung zu bewirken.

6. Verfahren nach einem der Ansprüche 1 bis 5, dadurch gekennzeichnet, dass der einfallende Lichtstrahl dadurch polarisiert wird, dass vor der doppelbrechenden Platte ein Polarisator angeordnet ist.

7. Verfahren nach einem der Ansprüche 1 bis 6, dadurch gekennzeichnet, dass eine punktförmige Lichtquelle verwendet wird.

8. Verfahren nach einem der Ansprüche 1 bis 6, dadurch gekennzeichnet, dass paralleles Licht sowie eine doppelbrechende Platte mit variabler Dicke verwendet werden, und dass die Länge der Lambda-Halbe-Platten durch Messung ihrer Position auf dem Helligkeitsprofil-Detektor ermittelt wird, um den gesuchten Einfallwinkel zu berechnen und anzuzeigen.

9. Verfahren nach einem der Ansprüche 1 bis 8, dadurch gekennzeichnet, dass der Lichtstahl von einer im wesentlichen monochromen Lichtquelle stammt.

10. Verfahren nach einem der Ansprüche 1 bis 9, dadurch gekennzeichnet, dass das von einem Objekt reflektierte diffuse Licht verwendet wird.

11. Verfahren nach einem der Ansprüche 1 bis 10, dadurch gekennzeichnet, dass als Lichtquelle ein Laser oder eine Laserdiode oder eine Leuchtdiode verwendet wird.

12. Verfahren nach einem der Ansprüche 1 bis 11, dadurch gekennzeichnet, dass eine doppelbrechende Platte aus Kalzit oder aus einem anderen optisch anisotropen Material verwendet wird.

13. Verfahren nach einem der Ansprüche 1, 2, 6 bis 12, dadurch gekennzeichnet, dass als Helligkeitsprofil-Detektor ein CCD-Photoelement verwendet wird.

14. Vorrichtung zur Messung des Einfallwinkels eines Lichtstrahls, dadurch gekennzeichnet, dass der Lichtstrahl polarisiert wird und die Vorrichtung eine doppelbrechende Platte (7, 18) und einen Polarisator-Analysator (9) aufweist, der die vom Lichtstrahl erzeugten Interferenzstreifen sichtbar macht, sowie einen Detektor der Helligkeitsänderungen (10) und eine elektronische Analyseschaltung (11), welche den Abstand zwischen den Interferenzstreifen analysiert.

15. Vorrichtung nach Anspruch 14, gekennzeichnet durch einen vor der doppelbrechenden Platte angeordneten Polarisator (8).

16. Vorrichtung nach Anspruch 14 oder 15, gekennzeichnet durch eine im wesentlichen monochrome Lichtquelle (S, LS, WP) mit einem Laser, einer Laserdiode oder einer Leuchtdiode.

17. Vorrichtung nach einem der Ansprüche 14 bis 16, gekennzeichnet durch eine doppelbrechende Platte (7) mit konstanter Dicke.

18. Vorrichtung nach einem der Ansprüche 14 bis 16, gekennzeichnet durch eine doppelbrechende Platte (18) mit variabler Dicke (el bis e2) und eine parallele Lichtquelle (WP).

19. Vorrichtung nach Anspruch 14, 17 oder 18, dadurch gekennzeichnet, dass die doppelbrechende Platte aus Kalzit oder aus einem anderen optisch anisotropen Material besteht.

20. Vorrichtung nach einem der Ansprüche 14 bis 19, dadurch gekennzeichnet, dass der Detektor der Helligkeitsänderungen ein Detektor des Profils der lokalen Helligkeit ist.

21. Vorrichtung nach Anspruch 20, dadurch gekennzeichnet, dass der Detektor ein CCD-Photoelement (10) mit nachfolgender elektronischer "Sample + Hold"-Schaltung (14) ist, welche an einem Bandpassfilter (16) angeschlossen ist, der mit einem Analyse-Mikroprozessor (17) verbunden ist.

22. Vorrichtung nach einem der Ansprüche 14 bis 19, dadurch gekennzeichnet, dass die doppelbrechende Platte (7, 18) in einer Anordnung enthalten ist, welche eine periodische Winkelbewegung der doppelbrechenden Platte erzeugt, bzw. deren Ausrichtung, und durch einen im wesentlichen punktförmigen Helligkeitsdetektor.

23. Anwendung der Vorrichtung nach einem der Ansprüche 14 bis 22 zur Messung der Entfernung zwischen der Vorrichtung und einer reflektierenden Oberfläche des zu messenden Objekts, dadurch gekennzeichnet, dass für eine bestimmte Stellung des Objekts ein Referenzabstand zwischen den Wellenbergen der Interferenzstreifen festgelegt wird, und dass die Änderung der Abstände in Abhängigkeit von den Stellungen des Objekts gemessen und in Längeneinheiten zur Verfügung gestellt wird.

## Claims

1. Method for measuring the angle of incidence of a luminous beam, characterised in that the polarised luminous beam is used which is brought to pass through a birefringent plate followed by a polariser analyser for obtaining a succession of fringes of interference, and in that the spacing between the crests of the fringes are analysed by means of an appropriate detector and an analysing electronic circuit, the spacing being a direct function of the angle to be measured.

2. Method according to claim 1, characterised in that the local variation of the luminous intensity is analysed after the polariser analyser by means of a detector of the luminous intensity profile.

3. Method according to claim 1, characterised in that the temporal variation of the luminous intensity created by a periodic, angular motion of the birefringent plate is analysed, and in that an essentially punctual detector of the luminous intensity is employed.

4. Method according to claim 3, characterised in that a periodic, angular motion is imparted to the birefringent plate by means of an electro-mechanical device.

5. Method according to claim 3, characterised in that a liquid crystal with birefringent properties is employed, and in that a variable electric or magnetic field is applied thereto in order to obtain a temporal variation of its axis of alignment.

6. Method according to one of claims 1 to 5, characterised in that the incident beam is polarised by interposition of a polariser before the birefringent plate.

7. Method according to one of claims 1 to 6, characterised in that a punctual light source is employed.

8. Method according to one of claims 1 to 6, characterised in that parallel light and a birefringent plate of variable thickness is employed, and in that one determines the length of a half-wave plate by measuring its position on the detector of intensity profile, for calculating and displaying the desired angle of incidence.

9. Method according to one of claims 1 to 8, characterised in that the luminous beam originates from an essentially monochromatic light source.

10. Method according to one of claims 1 to 9, characterised in that the reflected, diffused light of an object is employed.

11. Method according to one of claims 1 to 10, characterised in that a laser, a laser diode or a light emitting diode is employed as a light source.

12. Method according to one of claims 1 to 11, characterised in that a birefringent plate of calcite or another optically anisotropic material is employed.

13. Method according to one of claims 1, 2, 6 to 12, characterised in that a CCD phototransducer is used as a detector of the luminous intensity profile.

14. Measuring device of the angle of incidence of a luminous beam, characterised in that the light beam is polarised and in that the device comprises a birefringent plate (7, 18) and a polariser analyser (9) rendering visible the fringes of interference which are produced by the beam, as well as a detector of the variations of the luminous intensity (10) and an analysing electronic circuit (11) which analyses the spacing between said fringes of interference.

15. Device according to claim 14, characterised by a polariser (8) arranged before the birefringent plate.

16. Device according to claim 14 or 15, characterised by an essentially monochromatic light source (S, LS, WP) comprising a laser, a laser diode or a light emitting diode LED.

17. Device according to one of claims 14 to 16, characterised by a birefringent plate (7) having a constant thickness.

18. Device according to one of claims 14 to 16, characterised by a birefringent plate (18) having a variable thickness (el to e2), and a source of parallel light (WP).

19. Device according to claim 14, 17 or 18, characterised in that the birefringent plate is of calcite or another optically anisotropic material.

20. Device according to one of claims 14 to 19, characterised in that the detector of the variations of the luminous intensity is a detector of the local luminous intensity profile.

21. Device according to claim 20, characterised in that the detector is a CCD phototransducer (10) followed by a sample and hold electronic circuit (14) connected to a band-pass filter (16) which is connected to an analysing microprocessor (17).

22. Device according to one of claims 14 to 19, characterised in that the birefringent plate (7, 18) is comprised in an arrangement for creating a periodic, angular motion of the birefringent plate or of its axis of alignment, and by an essentially punctual detector of the luminous intensity.

23. Use of the device according to one of claims 14 to 22 for measuring the distance between said device and a reflecting surface of the object to be measured, characterised in that a spacing of reference between the crests of the fringes of interference is determined for a certain position of the object, and in that the variations of the spacing as a function of the positions of the object are measured in order to display them as units of length.

FIG.1

FIG.2

FIG.3

FIG.4

# FIG.5

# FIG.6

# FIG.7

FIG.8